# EUROPÄISCHE PATENTANMELDUNG

(11) **EP 3 474 411 A1**
(43) Veröffentlichungstag der Anmeldung: **24.04.2019**
(21) Anmeldenummer: 18000781.7
(22) Anmeldetag: 01.10.2018
(51) Int. Cl.: H02J 3/28, H02J 7/00, H02J 9/06, H02J 7/14, H02J 3/38

(54) **ENERGIEVERSORGUNGSVORRICHTUNG UND VERFAHREN ZUM BETREIBEN EINER ENERGIEVERSORGUNGSVORRICHTUNG**

(30) Priorität: 20.10.2017 DE 102017009794
(71) Anmelder: Allion Alternative Energieanlagen GmbH, 76228 Karlsruhe (DE)
(72) Erfinder: Allion, Axel, 76228 Karlsruhe (DE)
(74) Vertreter: Lichti - Patentanwälte Partnerschaft mbB

(57) **Zusammenfassung**

Eine Energieversorgungsvorrichtung (10) zum Versorgen von mindestens einem Verbraucher (14) und ein dazugehöriges Verfahren. Die Energieversorgungsvorrichtung weist einen Generator (11) zum Erzeugen von elektrischer Energie auf, sowie eine Energiespeicher (12) zum Speichern und Abgeben von elektrischer Energie, eine Anschlussleitung (15), mittels der die Energieversorgungsvorrichtung mit dem Verbraucher verbunden ist, und eine Steuereinrichtung (13), mittels der die abgegebene Leistung des Generators (11) veränderbar ist, wobei die Energieversorgungsvorrichtung (10) mittels der Steuereinrichtung (13) in einer von zumindest drei Konfigurationen betrieben wird. Je nach Situation speist lediglich der Generator (11) den Verbraucher, oder sowohl Generator (11) als auch Energiespeicher (12) oder der Generator speist Energie in den Energiespeicher (12).

## Beschreibung

Die Erfindung betrifft eine Energieversorgungsvorrichtung zum Versorgen von mindestens einem Verbraucher mit elektrischer Energie und ein Verfahren zum Betreiben der genannten Energieversorgungsvorrichtung.

Aus dem Stand der Technik sind Vorrichtungen zur unterbrechungsfreien Stromversorgung (USV) bekannt, die kritische Verbraucher von Anlagen, wie beispielsweise Krankenhäusern und Rechenzentren, bei einem Ausfall des Netzstroms vor Beschädigungen schützen und deren weiteren Betrieb gewährleisten sollen. Dazu ist gängigerweise ein Energiespeicher vorgesehen, der bei einem Stromausfall aktiviert wird und die Verbraucher mit elektrischer Energie versorgt. Diese Ausgestaltung hat den Nachteil, dass die Energie aus dem Energiespeicher zur Versorgung der Verbraucher nur dann bereitgestellt wird, wenn die USV eine Unterbrechung der Stromversorgung aus dem Netz detektiert. Die meiste Zeit über verbleibt die Energie ungenutzt im Energiespeicher.

Es ist daher die Aufgabe der Erfindung, eine Energieversorgungsvorrichtung und ein Verfahren zum Betreiben der Energieversorgungsvorrichtung zu entwickeln, die den oben genannten Nachteil beseitigen und dass darüber hinaus eine ressourcenschonende Versorgung der Verbraucher mit elektrischer Energie möglich ist.

Verfahrensmäßig wird die Aufgabe mit einem den Merkmalen des Anspruchs 1 gelöst. Dieser sieht ein Verfahren vor zum Betreiben einer Energieversorgungsvorrichtung zur Versorgung von mindestens einem Verbraucher mit elektrischer Energie mit einem Generator zum Erzeugen von elektrischer Energie, einem Energiespeicher zum Speichern und Abgeben von elektrischer Energie, einer Anschlussleitung, mittels der die Energieversorgungsvorrichtung mit dem Verbraucher verbunden ist, und einer Steuereinrichtung, mittels der die Leistung des Generators veränderbar ist, wobei die Energieversorgungsvorrichtung mittels der Steuereinrichtung in einer von zumindest drei Konfigurationen betrieben wird,
- wobei in einer ersten Konfiguration der Generator mit der Anschlussleitung verbunden ist, der Energiespeicher vom Generator getrennt ist und der Energiespeicher von der Anschlussleitung getrennt ist, so dass die Anschlussleitung lediglich vom Generator mit elektrischer Energie versorgt wird,
- wobei in einer zweiten Konfiguration der Generator mit der Anschlussleitung verbunden ist, der Energiespeicher vom Generator getrennt ist und der Energiespeicher mit der Anschlussleitung verbunden ist, so dass die Anschlussleitung sowohl vom Generator als auch vom Energiespeicher mit elektrischer Energie versorgt wird, wobei der Energiespeicher nicht vom Generator mit elektrischer Energie versorgt wird, und
- wobei in einer dritten Konfiguration der Generator mit der Anschlussleitung verbunden ist und der Energiespeicher mit dem Generator verbunden ist, so dass der Energiespeicher mit elektrischer Energie des Generators aufgeladen wird.

Vorrichtungsmäßig wird die Aufgabe gelöst durch eine Energieversorgungsvorrichtung mit den Merkmalen des Anspruchs 10. Dieser sieht eine Energieversorgungsvorrichtung vor zum Versorgen von mindestens einem Verbraucher mit elektrischer Energie, mit einem Generator zum Erzeugen von elektrischer Energie, einem Energiespeicher zum Speichern und Abgeben von elektrischer Energie, einer Anschlussleitung, mittels der die Energieversorgungsvorrichtung mit dem Verbraucher verbunden ist und einer Steuereinrichtung, mittels der die Leistung des Generators veränderbar ist, wobei die Energieversorgungsvorrichtung mittels der Steuereinrichtung in einer von zumindest drei Konfigurationen betreibbar ist,
- wobei in einer ersten Konfiguration der Generator mit der Anschlussleitung verbunden ist, der Energiespeicher vom Generator getrennt ist und der Energiespeicher von der Anschlussleitung getrennt ist, so dass die Anschlussleitung lediglich vom Generator mit elektrischer Energie versorgt ist,
- wobei in einer zweiten Konfiguration der Generator mit der Anschlussleitung verbunden ist, der Energiespeicher vom Generator getrennt ist und der Energiespeicher mit der Anschlussleitung verbunden ist, sodass die Anschlussleitung sowohl vom Generator als auch vom Energiespeicher mit elektrischer Energie versorgt ist, wobei der Energiespeicher nicht vom Generator mit elektrischer Energie versorgt ist, und
- wobei in einer dritten Konfiguration der Generator mit der Anschlussleitung verbunden ist und der Energiespeicher mit dem Generator verbunden ist, so dass der Energiespeicher mit elektrischer Energie des Generators aufgeladen wird.

Die Erfindung geht dabei von der Grundüberlegung aus, dass der Generator die Grund- bzw. Durchschnittslast des Verbrauchers trägt, indem der Generator mittels der Anschlussleitung dauerhaft mit dem Verbraucher verbunden ist. Dadurch wird der Verbraucher in erster Linie mit der im Generator erzeugten elektrischen Energie versorgt. Im Sinne der Erfindung umfasst der Generator eine Vorrichtung zum Erzeugen von elektrischer Energie, wobei diese Vorrichtung in der Energieversorgungsvorrichtung selbst ausgebildet ist. Damit sind beispielsweise externe Anschlüsse an ein (öffentliches) Stromnetz keine Generatoren im Sinne der Erfindung. Der Energiespeicher speichert die ihm zugeführte elektrische Energie mittels Umwandlung in andere Energieformen wie etwa potentielle und/oder chemische Energie.

Die erste Konfiguration eignet sich beispielsweise für den Normalbetrieb der Energieversorgungsvorrichtung, bei dem die Last des Verbrauchers ausschließlich mit der vom Generator erzeugten elektrischen Energie getragen wird. Die zweite Konfiguration der Energieversorgungsvorrichtung eignet sich unter anderem bei einem überdurchschnittlich großen Energiebedarf des Verbrauchers. In diesem Fall kann zusätzliche elektrische Energie aus dem Energiespeicher mittels Entladung des Energiespeichers bereitgestellt werden. Dabei bleibt vorzugsweise die Leistung des Generators gleich groß wie in der ersten Konfiguration, so dass der Generator die gleiche Menge elektrische Energie liefert wie in der ersten Konfiguration, da zur Unterstützung der Energiespeicher zugeschaltet wird. Durch geeignete Vorrichtungen kann sichergestellt werden, dass der Energiespeicher nicht vom Generator mit elektrischer Energie versorgt wird. Hierzu eignen sich beispielsweise Dioden und/oder Gleichrichter. Die dritte Konfiguration eignet sich zum Laden des Energiespeichers mittels der elektrischen Energie aus dem Generator, insbesondere bei einem verringerten Energiebedarf des Verbrauchers.

Verfahrensmäßig kann vorgesehen sein, dass die dritte Konfiguration in zumindest zwei Modi betrieben wird, wobei in einem ersten Modus der Energiespeicher von der Anschlussleitung getrennt ist und in einem zweiten Modus der Energiespeicher mit der Anschlussleitung verbunden ist. Wie bereits gesagt, eignet sich die dritte Konfiguration insbesondere für das Laden des Energiespeichers. Insbesondere bei einem normalen Energiebedarf des Verbrauchers kann im ersten Modus der dritten Konfiguration die Verbindung zwischen dem Energiespeicher und der Anschlussleitung unterbrochen sein, um den Energiespeicher schneller aufzuladen. Alternativ dazu kann bei einem hohen Energiebedarf des Verbrauchers im zweiten Modus der dritten Konfiguration der Energiespeicher mit der Anschlussleitung verbunden sein, um den Verbraucher über die Anschlussleitung zusätzlich mit Energie aus dem Energiespeicher zu versorgen.

In einer Weiterentwicklung ist vorgesehen, dass die Steuereinrichtung den Ladezustand LZ_{ES} des Energiespeichers und den Energiebedarf EB_{V} des Verbrauchers über die Anschlussleitung erfasst,
- wobei die Energieversorgungsvorrichtung in der ersten Konfiguration betrieben wird, wenn gilt: LZ_{ES} ≥ GW_{ES}, wobei GW_{ES} ein definierter Grenzwert für den Ladezustand LZ_{ES} des Energiespeichers ist, und wenn zusätzlich gilt: EB_{V} ≤ GW_{V}, wobei GW_{V} ein definierter Grenzwert für den Energiebedarf EB_{V} des Verbrauchers ist,
- wobei die Energieversorgungsvorrichtung in der zweiten Konfiguration betrieben wird, wenn gilt: LZ_{ES} ≥ GW_{ES} und EB_{V} > GW_{V} und
- wobei die Energieversorgungsvorrichtung in der dritten Konfiguration betrieben wird, wenn gilt: LZ_{ES} < GW_{ES}.

In der ersten Konfiguration liegt eine im Wesentlichen normale Situation der Energieversorgungsvorrichtung vor, bei der der Verbraucher ausschließlich mit elektrischer Energie aus dem Generator versorgt wird. Die zweite Konfiguration ist insbesondere durch einen erhöhten Energiebedarf EB_{V} des Verbrauchers charakterisiert, wobei der Verbraucher in diesem Fall zusätzlich mit elektrischer Energie aus dem Energiespeicher versorgt wird. Der Energiespeicher weist einen ausreichend hohen Ladezustand auf, so dass der Energiespeicher nicht mit elektrischer Energie vom Generator versorgt wird. Die dritte Konfiguration der Energieversorgungsvorrichtung entspricht dem Ladebetrieb des Energiespeichers.

Vorzugsweise wird die Leistung des Generators in der dritten Konfiguration der Energieversorgungsvorrichtung erhöht im Vergleich zur Leistung des Generators in der ersten und/oder zweiten Konfiguration. Die dritte Konfiguration der Energieversorgungsvorrichtung wird insbesondere dazu verwendet, einen weitgehend entladenen Energiespeicher aufzuladen, da bei einem weiteren Entladevorgang eine dauerhafte Beschädigung des Energiespeichers aufgrund Tiefentladung droht. Es ist daher sinnvoll, die Leistung des Generators zu erhöhen, um den Energiespeicher schneller aufzuladen.

Die Energieversorgungsvorrichtung kann im ersten Modus der dritten Konfiguration betrieben werden, wenn gilt: EB_{V} ≤ GW_{V} und die Energieversorgungsvorrichtung kann im zweiten Modus der dritten Konfiguration betrieben werden, wenn gilt: EB_{V} > GW_{V}. Für die Entscheidung des Modus der dritten Konfiguration ist der Energiebedarf EB_{V} des Verbrauchers wesentlich. Ist dieser in gesteigertem Maß vorhanden, wird der Energiespeicher mit der Anschlussleitung verbunden, um dem Verbraucher zusätzlich Energie aus dem Energiespeicher zur Verfügung zu stellen, wobei der Energiespeicher gleichzeitig mittels des Generators aufgeladen wird. Liegt dagegen lediglich ein normaler bzw. unterdurchschnittlicher Energiebedarf EB_{V} des Verbrauchers vor, wird die Verbindung zwischen dem Energiespeicher und der Anschlussleitung getrennt, so dass der Energiespeicher schneller aufgeladen werden kann. Vorzugsweise sind der Grenzwert GW_{ES} für den Ladezustand LZ_{ES} des Energiespeichers und der Grenzwert GW_{V} für den Energiebedarf EB_{V} des Verbrauchers nutzerseitig festgelegt und nutzerseitig veränderbar.

In einer weiteren Ausgestaltung der Erfindung wird die Leistung des Generators in der dritten Konfiguration der Energieversorgungsvorrichtung in Abhängigkeit des Energiebedarfs EB_{V} des Verbrauchers angepasst, um den Energiespeicher aufzuladen und den Verbraucher mit elektrischer Energie zu versorgen. Wenn zusätzlich ein erhöhter Energiebedarf EB_{V} des Verbrauchers festgestellt wird, kann eine Erhöhung der Generatorleistung auch sinnvoll sein, um gleichzeitig den Energiespeicher und den Verbraucher mit elektrischer Energie zu versorgen.

Die Energieversorgungsvorrichtung kann mit einem Stromnetz verbunden werden, insbesondere wenn gilt: EB_{V} > GW_{V} und LZ_{ES} < GW_{ES} und insbesondere, wenn dies zusätzlich für ein definiertes Zeitintervall gilt. Bei Feststellen eines niedrigen Ladezustands LZ_{ES} des Energiespeichers und gleichzeitig eines erhöhten Energiebedarfs EB_{V} des Verbrauchers droht sowohl die Unterversorgung des Verbrauchers mit elektrischer Energie als auch die Tiefentladung des Energiespeichers. In diesem Fall ist es als Schutzmaßnahme sinnvoll, Energie aus einem (öffentlichen) Stromnetz der Energieversorgungsvorrichtung zuzuführen, um einerseits den Energiespeicher aufzuladen und andererseits den Verbraucher mit elektrischen Energie zu versorgen, bis sich ein normalisierter Energiebedarf EB_{V} des Verbrauchers eingestellt hat.

Vorzugsweise wird die Leistung des Energiespeichers in der zweiten und/oder dritten Konfiguration verändert im Vergleich zur Leistung des Energiespeichers in der ersten Konfiguration. In diesem Sinne bezeichnet Leistung die zeitliche Rate, in der der Energiespeicher elektrische Energie aufzunehmen und/oder abzugeben vermag.

In einer weiteren verfahrensmäßigen Ausgestaltung der Erfindung wird der Energiespeicher mit der Anschlussleitung verbunden, wenn der Generator von der Anschlussleitung (15) getrennt wird, so dass in dieser Ausgestaltung die Betriebsweise einer USV ermöglicht wird.

Die Energieversorgungsvorrichtung kann vorrichtungsmäßig als Inselanlage ausgestaltet sein. Damit werden im Sinne der Erfindung autarke Systeme bzw. Off-Grid-Systeme zur Stromversorgung bezeichnet, die nicht an ein öffentliches Stromnetz angeschlossen sind. Mindestens eine Komponente des Energiespeichers kann einen Lithium-Ionen-Akku aufweisen, um elektrische Energie einfach und weitgehend dauerhaft zu speichern sowie bei Bedarf zur Verfügung zu stellen. Der Energiespeicher kann auch einen Lithium-Eisenphosphat-Speicher, einen Vanadium-Redox-Flow-Speicher und/oder einen Lithium-Schwefel-Akku umfassen.

Vorzugsweise kann zwischen dem Energiespeicher und dem Verbraucher mindestens ein Rückstromschalter angeordnet sein, um ein Rückfließen des Stroms vom Verbraucher zum Energiespeicher zu unterbinden. Aus diesem Grund kann die Energieversorgungsvorrichtung mindestens einen Rückstromschalter aufweisen, um den Stromfluss auch andernorts kontrollieren zu können. Alternativ oder zusätzlich dazu kann die Energieversorgungsvorrichtung hochohmige Widerstandselemente aufweisen, insbesondere bei den Verbindungsleitungen der Steuereinrichtung. Im Übrigen kann die Energieversorgungsvorrichtung Dioden aufweisen, um den Stromfluss zu kontrollieren. Die Steuereinrichtung kann mit dem Generator, dem Energiespeicher und/oder der Anschlussleitung verbunden sein, wobei mindestens eine Verbindung der Steuereinrichtung mi einer Komponente der Energieversorgungsvorrichtung drahtlos ausgestaltet sein kann, vorzugsweise mittels Funknetz, Bluetooth und/oder WLAN.

Vorzugsweise ist die Leistung des Generators in Abhängigkeit von dem Energiebedarf EB_{V} des Verbrauchers veränderbar, wobei insbesondere der Energiebedarf EB_{V} des Verbrauchers mittels der Steuereinrichtung messbar ist. Außerdem kann die Leistung des Energiespeichers veränderbar sein, so dass die Entladerate des Energiespeichers veränderbar ist und insbesondere dem Energiebedarf des Verbrauchers anpassbar ist.

In einer weiteren Ausgestaltung der Erfindung kann die dritte Konfiguration in zwei Modi betreibbar sein, wobei in einem ersten Modus der Energiespeicher von der Anschlussleitung getrennt ist und in einem zweiten Modus der Energiespeicher mit der Anschlussleitung verbunden ist.

Mindestens eine Komponente des Generators kann als ÖlStrom-Erzeuger, Gasgenerator, Blockheizkraftwerk, Windstrom-, Wasserkraft- bzw. Photovoltaik-Modul und/oder als Brennstoffzelle ausgestaltet sein. Der Öl-Stromerzeuger kann mit Benzin, synthetischem Benzin, Erd-, Diesel- und/oder mit Pflanzenöl betreibbar sein. Gasgenerator im Sinne der Erfindung bezeichnet Vorrichtungen, bei denen elektrische Energie durch das Verbrennen von Gasen, insbesondere Erd-/Biogasen, erzeugt werden kann. Brennstoffzellen eignen sich zur chemischen Energiegewinnung, insbesondere auf der Basis von Wasserstoff, und weisen einen vergleichsweisen hohen Wirkungsgrad bei der Energieerzeugung auf. Darüber hinaus können die Brennstoffzellen mit Methan- und/oder Erdgas betreibbar sein. Alternativ oder zusätzlich dazu kann die Energieversorgungsvorrichtung mit einer oder mehreren der besagten Komponenten verbindbar sein. Sämtliche erwähnten Möglichkeiten zur Stromerzeugung stellen aus Kosten- und/oder Umweltgründen eine Alternative zur regulären Stromversorgung aus einem öffentlichen Stromnetz dar.

Vorzugsweise ist mindestens eine Komponente des Generators als Heizelement und/oder als Blockheizkraftwerk ausgestaltet. Hierzu kann mindestens eine Wärmeleitung an die Energieversorgungsvorrichtung angeschlossen sein, um die erzeugte Wärme an den gewünschten Ort abzuführen. Mittels dieser Ausgestaltung ist die beim Erzeugen der elektrischen Energie im Generator entstehende Wärme nutzbar, was den Wirkungsgrad der Energieversorgungsvorrichtung insgesamt erhöht. Darüber hinaus kann die Wärme auch zur Versorgung eines Kühlelements benutzt werden. Alternativ oder zusätzlich dazu kann die Energieversorgungsvorrichtung mit bereits bestehenden Heizelementen und/oder Blockheizkraftwerkskomponenten verbindbar sein.

Mindestens eine Komponente des Generators und/oder mindestens eine Komponente des Energiespeichers können nachrüstbar sein. Auf diese Weise sind insbesondere die Leistungsfähigkeit des Generators bzw. die Kapazität des Energiespeichers vom Benutzer anpassbar. In einer vorteilhaften Ausgestaltung kann die Energieversorgungsvorrichtung eine Fernsteuereinheit aufweisen, die zur drahtlosen Übertragung elektromagnetischer Signale ausgestaltet ist. Beispielsweise sind hierdurch Signale der Energieversorgungsvorrichtung mittels Funknetz, Infrarot-Strahlung oder WLAN übertragbar. Die Fernsteuereinheit kann als Fernwartungseinheit ausgestaltet sein, mittels der ein Benutzer in einem räumlich getrennten Bereich die Energieversorgungsvorrichtung steuern kann. Hierdurch können auch kritische Parameter der Energieversorgungsvorrichtung von einem Benutzer in einem räumlich getrennten Bereich mittels der Fernsteuereinheit festgelegt bzw. geändert werden. Dies betrifft insbesondere die nutzerseitigen Vorgaben für den Grenzwert GW_{ES} für den Ladezustand des Energiespeichers und für den Grenzwert GW_{V} für den Energiebedarf EB_{V} des Verbrauchers.

Vorzugsweise weist die Energieversorgungsvorrichtung eine Netzleitung auf, mittels der elektrische Energie aus einem Stromnetz der Energieversorgungsvorrichtung zuführbar ist. Auf diese Weise kann Energie aus einem öffentlichen Stromnetz der Energieversorgungsvorrichtung wahlweise zugeschaltet werden, wobei jedoch weiterhin die elektrische Energie aus dem Generator die primäre Stromquelle für den Verbraucher darstellt. In diesem Zuge kann die Energieversorgungsvorrichtung mit dem Anschluss an das Stromnetz auch als USV betrieben werden, etwa wenn eine getrennte Verbindung zwischen dem Generator und der Anschlussleitung detektiert wird. Verschiedene Modi sind dabei möglich, etwa eine Verbindung des Netzstroms mit der Anschlussleitung zur Versorgung der Verbraucher mit Netzstrom und/oder eine Verbindung des Netzstroms mit dem Energiespeicher, so dass der Energiespeicher mittels des Netzstroms aufgeladen werden kann. Die Energieversorgungsvorrichtung kann mit einer Einrichtung zur Herstellung von Druckluft verbunden sein, um nicht benötigte Energie der Energieversorgungsvorrichtung weiterhin zu nutzen.

Für den Heimgebrauch kann der Energiespeicher der erfindungsgemäßen Energieversorgungsvorrichtung eine Energiespeicherkapazität von 10 kWh bis 300 kWh, vorzugsweise von 100 kWh bis 200 kWh, aufweisen. Der Generator kann als Brennstoffzelle und/oder Verbrennungsmotor ausgestattet sein und/oder eine Leistung von 1 kW bis 17 MW, vorzugsweise von 1 kW bis 1,5 kW aufweisen. Für industrielle Anwendungen kann der Energiespeicher eine Energiespeicherkapazität von mindestens 1,5 MWh aufweisen. Der Generator weist vorzugsweise eine Leistung von 800 kW bis 1000 kW auf.

Weitere Vorteile und Merkmale der Erfindung ergeben sich aus den Ansprüchen und der nachfolgenden Beschreibung, in der Ausführungsbeispiele der Erfindung unter Bezugnahme auf die Zeichnungen im Einzelnen erläutert sind. Dabei zeigen:
- Fig. 1: einen schematischen Schaltplan einer erfindungsgemäßen Energieversorgungsvorrichtung in einer ersten Konfiguration;
- Fig. 2: die Energieversorgungsvorrichtung aus Fig. 1 in einer zweiten Konfiguration;
- Fig. 3: die Energieversorgungsvorrichtung aus Fig. 1 in einem ersten Modus einer dritten Konfiguration;
- Fig. 4: die Energieversorgungsvorrichtung in Fig. 3 in einem zweiten Modus der dritten Konfiguration;
- Fig. 5: eine weitere Ausgestaltung der Energieversorgungsvorrichtung mit einem Anschluss an ein öffentliches Stromnetz;
- Fig. 6: eine weitere Ausgestaltung der Energieversorgungsvorrichtung mit einer Fernsteuerungseinheit und
- Fig. 7: ein schematisches Flussdiagramm der Energieversorgungsvorrichtung.

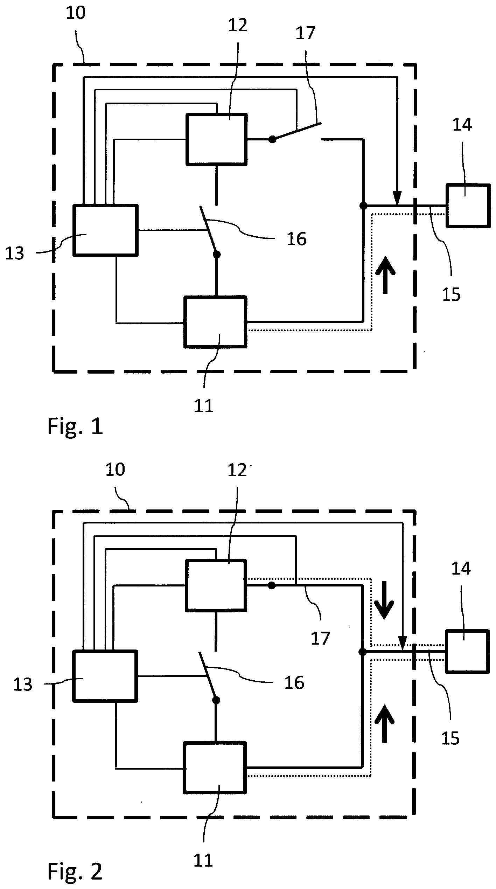

Fig. 1 zeigt eine erfindungsgemäße und gestrichelt dargestellte Energieversorgungsvorrichtung 10 in einem schematischen Schaltbild mit einem Generator 11, einem Energiespeicher 12 und einer Steuereinheit 13. Ein schematisch dargestellter Verbraucher 14 ist mittels einer Anschlussleitung 15 mit der Energieversorgungsvorrichtung 10 verbunden.

Der Generator 11 ist im gezeigten Ausführungsbeispiel der Fig. 1 als Gasgenerator ausgestaltet und erzeugt elektrische Energie durch das Verbrennen von Erdgas. Die gewonnene Energie wird über die mit dem Generator 11 verbundene Anschlussleitung 15 an den Verbraucher 14 geleitet, dessen Durchschnitts- bzw. Grundlast in der in Fig. 1 gezeigten ersten Konfiguration vom Generator 11 getragen wird.

Zwischen dem Generator 11 und dem Energiespeicher 12 ist ein erster Schalter 16 im geöffneten Zustand angeordnet, so dass die Verbindung zwischen dem Generator 11 und dem Energiespeicher 12 unterbrochen ist und demnach kein Strom zwischen dem Generator 11 und dem Energiespeicher 12 fließen kann. Zwischen dem Energiespeicher 12 und der Anschlussleitung 15 ist ein zweiter Schalter 17 vorgesehen, der in Fig. 1 in geöffnetem Zustand dargestellt ist, so dass keine Energie von dem Energiespeicher 12 über die Anschlussleitung 15 zum Verbraucher 14 fließen kann.

Die Steuereinheit 13 ist mit dem Generator 11, dem Energiespeicher 12, dem ersten Schalter 16, dem zweiten Schalter 17 und der Anschlussleitung 15 verbunden. Hierdurch können kritische Parameter des Generators 11, wie beispielsweise dessen erzeugte elektrische Energie bzw. die aktuell eingestellte Leistung, und des Energiespeichers 12, beispielsweise dessen Ladezustand, eingelesen und verändert werden. Mittels der Steuereinrichtung 13 sind darüber hinaus der erste Schalter 16 als auch der zweite Schalter 17 betätigbar, so dass die jeweils zugeordneten elektrischen Verbindungen geöffnet und geschlossen werden können. Darüber hinaus ermöglicht die Verbindung der Steuereinheit 13 mit der Anschlussleitung 15 eine Messung des aktuellen Energiebedarfs EB_{V} des Verbrauchers 14. Sämtliche Verbindungen können mit gängigen elektrischen Komponenten, wie beispielsweise Gleichrichtern und/oder Dioden und/oder Rückstromschaltern und/oder bzw. (hochohmigen) Widerständen ausgestattet sein, was der Übersichtlichkeit wegen nicht dargestellt ist.

In der in Fig. 1 gezeigten ersten Konfiguration der Energieversorgungsvorrichtung 10 ist der Stromfluss als punktierte Linie vom Generator 11 zum Verbraucher 14 dargestellt. Die Richtung des Stromflusses wird im Folgenden durch Pfeile an den punktierten Linien angegeben.

Steigt der Energiebedarf EB_{V} des Verbrauchers 14, kann mittels der Steuereinrichtung 13 der zweite Schalter 17 geschlossen werden, wodurch der Energiespeicher 12 mit der Anschlussleitung 15 verbunden wird und zusätzlich zu der elektrischen Energie aus dem Generator 11 den Verbraucher 14 mit elektrischer Energie versorgt. Dies entspricht der in Fig. 2 dargestellten, zweiten Konfiguration der Energieversorgungsvorrichtung 10. In diesem Zustand ist die Verbindung zwischen dem Generator 11 und dem Energiespeicher 12 mittels geöffnetem ersten Schalter 16 nachwievor unterbrochen, so dass der Energiespeicher 12 nicht vom Generator 11 mit elektrischer Energie versorgt wird. Zu diesem Zweck ist zwischen dem Knotenpunkt der Anschlussleitung 15 und dem Energiespeicher 12 eine nicht dargestellte Diode angeordnet, die nur einen Stromfluss vom Energiespeicher 12 zum Verbraucher 14 zulässt. Die Leistung des Generators 11 kann in der zweiten Konfiguration der Energieversorgungsvorrichtung 10 entweder unverändert belassen oder in Abhängigkeit des gestiegenen Energiebedarfs EB_{V} des Verbrauchers 14 angepasst, insbesondere gesteigert, werden. Entsprechend der Darstellung aus Fig. 1 sind der Stromfluss vom Generator 11 zum Verbraucher 14 und der Stromfluss vom Energiespeicher 12 zum Verbraucher 14 als gepunktete Linien dargestellt.

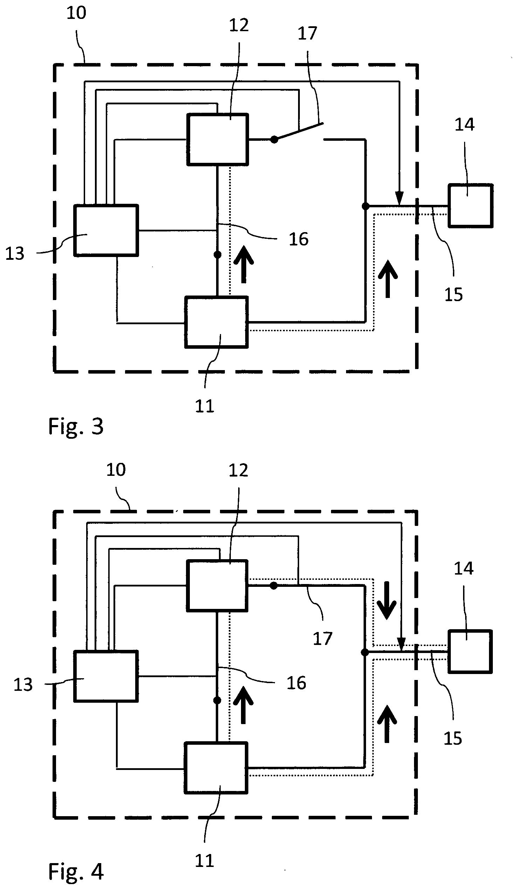

Im Falle eines deutlich reduzierten Ladezustands des Energiespeichers 12 wird die Energieversorgungsvorrichtung 10 in einer dritten Konfiguration betrieben, die zwei Modi gemäß den Fig. 3 und 4 aufweist. Im ersten Modus gemäß der Darstellung in Fig. 3 ist der erste Schalter 16 geschlossen, so dass der Generator 11 mit dem Energiespeicher 12 verbunden ist. Auf diese Weise wird neben dem Verbraucher 14 auch der Energiespeicher 12 mit elektrischer Energie aus dem Generator 11 versorgt, wodurch der Energiespeicher 12 aufgeladen wird. Der zweite Schalter 17 zwischen dem Energiespeicher 12 und der Anschlussleitung 15 ist geöffnet, so dass keine Energie vom Energiespeicher 12 zum Verbraucher 14 fließen kann. Auf diese Weise wird der Energiespeicher 12 schnell aufgeladen. In Fig. 3 ist der Stromfluss als gepunktete Linie dargestellt.

Wird dagegen zusätzlich ein erhöhter Energiebedarf EB_{V} des Verbrauchers 14 festgestellt, kann im Vergleich zu dem ersten Modus gemäß Fig. 3 im zweiten Modus gemäß Fig. 4 zusätzlich der zweite Schalter 17 geschlossen werden, so dass auch Energie aus dem Energiespeicher 12 zum Verbraucher 14 fließen kann, um den erhöhten Energiebedarf EB_{V} des Verbrauchers 14 zu decken. Auch in diesem Fall wird der Energiespeicher 12 mit elektrischer Energie aus dem Generator 11 über den geschlossenen ersten Schalter 16 versorgt. Insbesondere im zweiten Modus der dritten Konfiguration gemäß Fig. 4 kann die Leistung des Generators 11 mittels der Steuereinrichtung 13 erhöht werden, um sowohl den Energiespeicher 12 aufzuladen, als auch den Verbraucher 14 mit elektrischer Energie zu versorgen. Der Stromfluss ist in Fig. 4 als gepunktete Linien dargestellt.

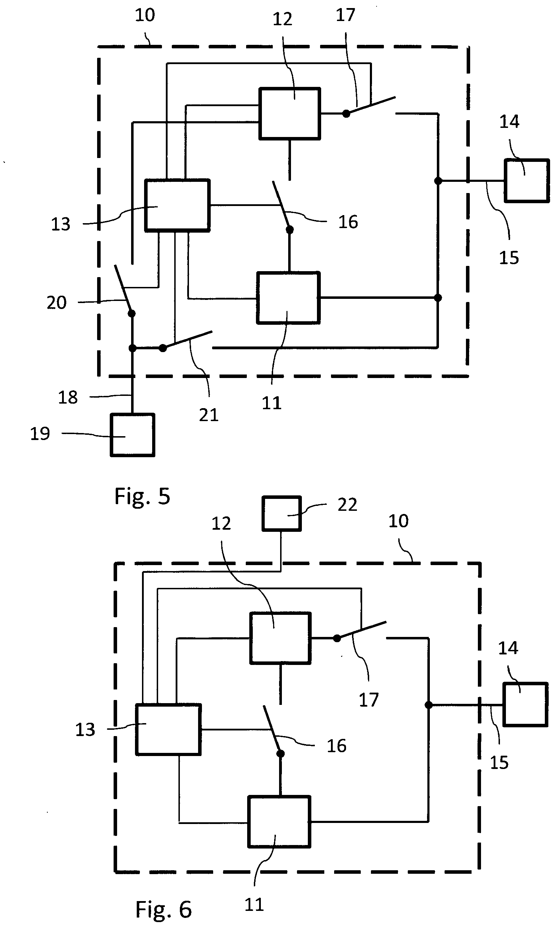

Fig. 5 zeigt die Energieversorgungsvorrichtung 10 in einer weiteren Ausgestaltung, bei der mittels einer Netzleitung 18 eine Verbindung zwischen der Energieversorgungsvorrichtung 10 und einem insbesondere öffentlichen Stromnetz 19 hergestellt werden kann. Über einen dritten Schalter 20 ist das Stromnetz 19 mit dem Energiespeicher 12 verbunden, wobei über einen vierten Schalter 21 das Stromnetz 19 mit der Anschlussleitung 15 verbunden ist. Auch der dritte Schalter 20 und der vierte Schalter 21 sind mittels Verbindungsleitungen durch die Steuereinrichtung 13 betätigbar. Auf diese Weise kann Energie aus dem Stromnetz 19 dem Energiespeicher 12 und/oder dem Verbraucher 14 zugeführt werden, um sowohl den Generator 11, als auch den Energiespeicher 12 zu unterstützen. Diese Ausgestaltung eignet sich vor allem dann, wenn ein länger andauernder, erhöhter Energiebedarf EB_{V} des Verbrauchers 14 zu erwarten ist. Sämtliche Verbindungen der Steuereinrichtung 13 mit den Komponenten der Energieversorgungseinrichtung 10 sind der Übersichtlichkeit wegen als Verbindungsleitungen dargestellt, können selbstverständlich aber auch drahtlos ausgestaltet sein.

Fig. 6 zeigt eine weitere Ausgestaltung der Energieversorgungsvorrichtung 10, die im Wesentlichen der ersten Konfiguration der Energieversorgungsvorrichtung 10 gemäß Fig. 1 entspricht, wobei die Steuereinrichtung 13 mit einer Fernsteuereinrichtung 22 verbunden ist. Die Fernsteuereinrichtung 22 ist zur Übertragung elektromagnetischer Signale ausgestaltet und dient zur Fernsteuerung bzw. Fernwartung der Energieversorgungsvorrichtung 10. Dadurch können die durch die Steuereinrichtung 13 gemessenen Parameter der Energieversorgungsvorrichtung 10 zu einer externen Kontrollstation gesendet bzw. von dieser empfangen werden, so dass ein Benutzer die Energieversorgungsvorrichtung 10 aus der Ferne kontrollieren und steuern kann.

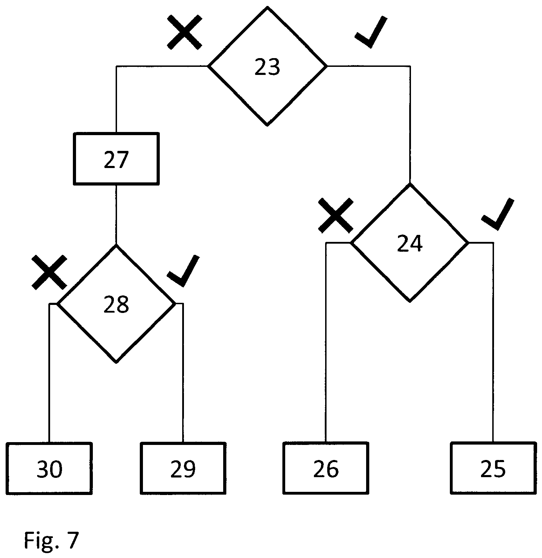

Fig. 7 zeigt in einem schematischen Flussdiagramm einen möglichen Verfahrensablauf der Energieversorgungsvorrichtung 10. In dieser Ausgestaltung misst die Steuereinrichtung 13 den Ladezustand des Energiespeichers 12 und den Energiebedarf EB_{V} des Verbrauchers 14 mittels der Anschlussleitung 15. Weiterhin sind von einem Benutzer ein Grenzwert GW_{LZ} für den Ladezustand LZ_{ES} des Energiespeichers 12 und ein Grenzwert GW_{V} für den Energiebedarf EB_{V} des Verbrauchers 14 definiert. Dabei entspricht der Grenzwert GW_{LZ} dem Zustand des Energiespeichers 12, bei dem eine weitere Entladung des Energiespeichers 12 problematisch und daher das Aufladen des Energiespeichers 12 notwendig ist. Der Grenzwert GW_{V} legt dagegen einen zu erwarteten normalen Energiebedarf des Verbrauchers 14 fest.

In einem ersten Schritt erfolgt die Abfrage 23, ob gilt: LZ_{ES} ≥ GW_{ES}. Ist dies der Fall, erfolgt eine zweite Abfrage 24, ob gilt: EB_{V} ≤ GW_{V}. Ist dies der Fall, wechselt Energieversorgungsvorrichtung 10 in die erste Konfiguration 25 gemäß Fig. 1. Dabei wird der Energiespeicher 12 von der Anschlussleitung 15 getrennt, etwa durch das in Fig. 1 gezeigte Öffnen des zweiten Schalters 17, und es wird der Energiespeicher 12 vom Generator 11 getrennt, etwa durch das Öffnen des ersten Schalters 16. In diesem Zustand ist der Energiespeicher 12 ausreichend geladen und der Energiebedarf EB_{V} des Verbrauchers 14 entspricht der Durchschnittslast. Der Verbraucher 14 wird allein durch die elektrische Energie aus dem Generator 11 versorgt.

Ergibt die zweite Abfrage 24, dass gilt: EB_{V} > GW_{V}, aktiviert die Steuereinrichtung 13 die zweite Konfiguration. Gemäß Fig. 2 wird der Energiespeicher 12 mit der Anschlussleitung 15 verbunden und vom Generator 11 getrennt. Da ein erhöhter Energiebedarf EB_{V} des Verbrauchers 14 festgestellt wurde, wird zusätzlich elektrische Energie aus dem Energiespeicher 12 für den Verbraucher 14 bereitgestellt. Dabei ist der Ladezustand des Energiespeichers 12 noch derart hoch, dass eine Aufladung des Energiespeichers 12 noch nicht notwendig ist. Es fließt daher keine elektrische Energie vom Generator 11 zum Energiespeicher 12.

Ergibt dagegen bereits die erste Abfrage 23, dass gilt: LZ_{ES} < GW_{ES}, wechselt die Energieversorgungsvorrichtung 10 in die dritte Konfiguration 27, wobei der Energiespeicher 12 mit dem Generator 11 verbunden wird. In diesem Zustand erfolgt eine dritte Abfrage 28, ob gilt: EB_{V} ≤ GW_{V}. Ist dies der Fall, liegt ein normaler Energiebedarf EB_{V} des Verbrauchers 14 vor und die Energieversorgungsvorrichtung 10 wird im ersten Modus 29 der dritten Konfiguration 27 betrieben, bei der der Energiespeicher 12 von der Anschlussleitung 15 getrennt ist. In diesem Fall versorgt der Generator 12 sowohl den Energiespeicher 12 als auch den Verbraucher 14 mit elektrischer Energie. Optional kann die Leistung des Generators mittels der Steuereinrichtung 13 angehoben werden.

Ergibt hingeben die dritte Abfrage 28, dass gilt: EB_{V} > GW_{V}, wechselt die Energieversorgungsvorrichtung 10 in den zweiten Modus 30, bei dem der Energiespeicher 12 mit der Anschlussleitung 15 verbunden wird. Auf diese Weise wird der Verbraucher 14 sowohl vom Generator 11 als auch vom Energiespeicher 12 mit elektrischer Energie versorgt, um den gesteigerten Energiebedarf zu decken. Gleichzeitig wird gegebenenfalls die Leistung des Generators 11 angehoben, um den Energiespeicher 12 vor weiterer Entladung zu schützen.

## Patentansprüche

1. Verfahren zum Betreiben einer Energieversorgungsvorrichtung (10) zur Versorgung von mindestens einem Verbraucher (14) mit elektrischer Energie, mit einem Generator (11) zum Erzeugen von elektrischer Energie, einem Energiespeicher (12) zum Speichern und Abgeben von elektrischer Energie, einer Anschlussleitung (15), mittels der die Energieversorgungsvorrichtung (10) mit dem Verbraucher (14) verbunden ist, und einer Steuereinrichtung (13), mittels der die Leistung des Generators (11) veränderbar ist, wobei die Energieversorgungsvorrichtung (10) mittels der Steuereinrichtung (13) in einer von zumindest drei Konfigurationen betrieben wird,
- wobei in einer ersten Konfiguration der Generator (11) mit der Anschlussleitung (15) verbunden ist, der Energiespeicher (12) vom Generator getrennt ist und der Energiespeicher (12) von der Anschlussleitung (15) getrennt ist, so dass die Anschlussleitung (15) lediglich vom Generator (11) mit elektrischer Energie versorgt wird,
- wobei in einer zweiten Konfiguration der Generator (11) mit der Anschlussleitung (15) verbunden ist, der Energiespeicher (12) vom Generator (11) getrennt ist und der Energiespeicher (12) mit der Anschlussleitung (15) verbunden ist, so dass die Anschlussleitung (15) sowohl vom Generator (11) als auch vom Energiespeicher (12) mit elektrischer Energie versorgt wird, wobei der Energiespeicher (12) nicht vom Generator (11) mit elektrischer Energie versorgt wird, und
- wobei in einer dritten Konfiguration der Generator (11) mit der Anschlussleitung (15) verbunden ist und der Energiespeicher (12) mit dem Generator (11) verbunden ist, so dass der Energiespeicher (12) mit elektrischer Energie des Generators (11) aufgeladen wird.

2. Verfahren nach Anspruch 1, **dadurch gekennzeichnet, dass** die dritte Konfiguration in zumindest zwei Modi betrieben wird, wobei in einem ersten Modus der Energiespeicher (12) von der Anschlussleitung (15) getrennt ist und in einem zweiten Modus der Energiespeicher (12) mit der Anschlussleitung (15) verbunden ist.

3. Verfahren nach einem der Ansprüche 1 oder 2, **dadurch gekennzeichnet, dass** die Steuereinrichtung (13) den Ladezustand (LZ_{ES}) des Energiespeichers (12) und den Energiebedarf (EB_{V}) des Verbrauchers (14) über die Anschlussleitung (15) erfasst,
- wobei die Energieversorgungsvorrichtung (10) in der ersten Konfiguration betrieben wird, wenn gilt: ≥ GW_{ES}, wobei GW_{ES} ein definierter Grenzwert für den Ladezustand (LZ_{ES}) des Energiespeichers (12) ist, und wenn zusätzlich gilt: EB_{V} ≤ GW_{V}, wobei GW_{V} ein definierter Grenzwert für den Energiebedarf EB_{V} des Verbrauchers (14) ist,
- wobei die Energieversorgungsvorrichtung (10) in der zweiten Konfiguration betrieben wird, wenn gilt: ≤ GW_{ES} und EB_{V} > GW_{V} und
- wobei die Energieversorgungsvorrichtung (10) in der dritten Konfiguration betrieben wird, wenn gilt: LZ_{ES} < GW_{ES} .

4. Verfahren nach einem der Ansprüche 1 bis 3, **dadurch gekennzeichnet, dass** die Leistung des Generators (11) in der dritten Konfiguration erhöht wird im Vergleich zur Leistung des Generators (11) in der ersten und/oder zweiten Konfiguration.

5. Verfahren nach Anspruch 3, **dadurch gekennzeichnet, dass** die Energieversorgungsvorrichtung (10) im ersten Modus der dritten Konfiguration betrieben wird, wenn gilt: EB_{V} ≤ GW_{V} und wobei die Energieversorgungsvorrichtung (10) im zweiten Modus der dritten Konfiguration betrieben wird, wenn gilt: EB_{V} > GW_{V}.

6. Verfahren nach einem der Ansprüche 1 bis 5, **dadurch gekennzeichnet, dass** die Leistung des Generators (11) in der dritten Konfiguration der Energieversorgungsvorrichtung (10) in Abhängigkeit des Energiebedarfs EB_{V} des Verbrauchers (14) angepasst wird.

7. Verfahren nach einem der Ansprüche 1 bis 6, **dadurch gekennzeichnet, dass** die Energieversorgungsvorrichtung (10) mit einem Stromnetz (19) verbunden wird, insbesondere wenn gilt: EB_{V} > GW_{V} und LZ_{ES} < GW_{ES} und insbesondere, wenn dies zusätzlich für ein definiertes Zeitintervall gilt.

8. Verfahren nach einem der Ansprüche 1 bis 7, **dadurch gekennzeichnet dass** die Leistung des Energiespeichers (12) in der zweiten und/oder dritten Konfiguration verändert wird im Vergleich zur Leistung des Energiespeichers (12) in der ersten Konfiguration.

9. Verfahren nach einem der Ansprüche 1 bis 8, **dadurch gekennzeichnet, dass** der Energiespeicher (12) mit der Anschlussleitung (15) verbunden wird, wenn der Generator von der Anschlussleitung (15) getrennt wird.

10. Energieversorgungsvorrichtung (10) zum Versorgen von mindestens einem Verbraucher (14) mit elektrischer Energie, mit einem Generator (11) zum Erzeugen von elektrischer Energie, einem Energiespeicher (12) zum Speichern und Abgeben von elektrischer Energie, einer Anschlussleitung (15), mittels der die Energieversorgungsvorrichtung (10) mit dem Verbraucher (14) verbunden ist und einer Steuereinrichtung (13), mittels der die Leistung des Generators (11) veränderbar ist, wobei die Energieversorgungsvorrichtung (10) mittels der Steuereinrichtung (13) in einer von zumindest drei Konfigurationen betreibbar ist,
- wobei in einer ersten Konfiguration der Generator (11) mit der Anschlussleitung (15) verbunden ist, der Energiespeicher (12) vom Generator (11) getrennt ist und der Energiespeicher (12) von der Anschlussleitung (15) getrennt ist, so dass die Anschlussleitung (15) lediglich vom Generator (11) mit elektrischer Energie versorgt ist,
- wobei in einer zweiten Konfiguration der Generator (11) mit der Anschlussleitung (15) verbunden ist, der Energiespeicher (12) vom Generator (11) getrennt ist und der Energiespeicher (12) mit der Anschlussleitung (15) verbunden ist, sodass die Anschlussleitung (15) sowohl vom Generator (11) als auch vom Energiespeicher (12) mit elektrischer Energie versorgt wird, wobei der Energiespeicher (12) nicht vom Generator (11) mit elektrischer Energie versorgt wird, und
- wobei in einer dritten Konfiguration der Generator (11) mit der Anschlussleitung (15) verbunden ist und der Energiespeicher (12) mit dem Generator (11) verbunden ist, so dass der Energiespeicher (12) mit elektrischer Energie des Generators (11) aufgeladen wird.

11. Vorrichtung nach Anspruch 10, **dadurch gekennzeichnet, dass** die dritte Konfiguration in zwei Modi betreibbar ist, wobei in einem ersten Modus der Energiespeicher (12) von der Anschlussleitung (15) getrennt ist und in einem zweiten Modus der Energiespeicher (12) mit der Anschlussleitung (15) verbunden ist.

12. Vorrichtung nach einem der Ansprüche 10 oder 11, **dadurch gekennzeichnet, dass** die Leistung des Energiespeichers (12) veränderbar ist.

13. Vorrichtung nach einem der Ansprüche 10 bis 12, **dadurch gekennzeichnet, dass** mindestens eine Komponente des Generators (11) als Öl-Stromerzeuger, Gasgenerator, Wind-Strom-, Wasserkraft-bzw. Photovoltaik-Modul und/oder als Brennstoffzelle ausgestaltet ist.

14. Vorrichtung nach einem der Ansprüche 10 bis 13, **dadurch gekennzeichnet, dass** mindestens eine Komponente des Generators (11) als Heizelement und/oder als Blockheizkraftwerk ausgestaltet ist.

15. Vorrichtung nach einem der Ansprüche 10 bis 14, **dadurch gekennzeichnet, dass** mindestens eine Komponente des Generators (11) und/oder mindestens eine Komponente des Energiespeichers (12) nachrüstbar sind.

16. Vorrichtung nach einem der Ansprüche 10 bis 15, **dadurch gekennzeichnet, dass** die Energieversorgungsvorrichtung (10) eine Fernsteuereinheit (22) aufweist, die zur drahtlosen Übertragung elektromagnetischer Signale ausgestaltet ist.

17. Vorrichtung nach einem der Ansprüche 10 bis 16, **dadurch gekennzeichnet, dass** die Energieversorgungsvorrichtung (10) eine Netzleitung (18) aufweist, mittels der elektrische Energie aus einem Stromnetz (19) der Energieversorgungsvorrichtung (10) zuführbar ist.

18. Vorrichtung nach einem der Ansprüche 10 bis 17, **dadurch gekennzeichnet, dass** die Energieversorgungsvorrichtung (10) mit einer Einrichtung zur Herstellung von Druckluft verbunden ist.
